# NEUE EUROPÄISCHE PATENTSCHRIFT

(11) **EP 0 425 864 B2**
(45) Veröffentlichungstag und Bekanntmachung des Hinweises auf die Entscheidung über den Einspruch: **02.07.1997**
(45) Hinweis auf die Patenterteilung: 06.04.1994
(21) Anmeldenummer: 90119574.3
(22) Anmeldetag: 12.10.1990
(51) Int. Cl.: F16D 3/84

(54) **Faltenbalg**
Bellows
Soufflet

(30) Priorität: 31.10.1989 DE 3936276
(43) Veröffentlichungstag der Anmeldung: 08.05.1991
(73) Patentinhaber: GKN Automotive AG, D-53797 Lohmar (DE)
(72) Erfinder: Schafferus, Thomas, W-4134 Rheinberg 1 (DE); Müller, Karl-Heinz, W-5248 Wissen (DE)
(74) Vertreter: Neumann, Ernst Dieter, Dipl.-Ing.

(56) Entgegenhaltungen:
- EP-A- 0 279 728
- DE-A- 3 043 314
- FR-A- 2 073 843
- FR-A- 2 591 688
- GB-A- 2 012 022

## Beschreibung

Die Erfindung betrifft einen Faltenbalg aus dünnwandigem thermoplastischem Elastomer mit zumindest einem Bundbereich, der auf der Innenseite einen in eine im Querschnitt rechteck- oder trapezförmige Ringnut eines Drehgelenkbauteils oder dergleichen eingreifenden innenliegenden Ringwulst aufweist und der auf der Außenseite eine im Querschnitt rechteck- oder trapezförmige Ringnut für ein Spannmittel aufweist, die einen im wesentlichen flachen am Spannmittel anliegenden Boden hat und breiter ist als der innenliegende Ringwulst, wobei der Bundbereich innerhalb der flachen Ringnut im Bereich des innenliegenden Ringwulstes zumindest einen Ringspalt aufweist.

Derartige Faltenbälge aus einem Material wie Hytrel (eingetragenes Warenzeichen der Firma Dupont) oder Santoprene (eingetragenes Warenzeichen der Firma Monsanto) haben einen wesentlich höheren E-Modul als früher verwendetes gummielastisches Material, so daß das Festhalten der Bundbereiche auf entsprechenden Drehgelenkbauteilen oder dergleichen problematisch ist. An die verwendeten Spannmittel werden erhöhte Anforderungen gestellt, da größere Vorspannkräfte aufgebracht werden müssen.

Ein Faltenbalg dieser Art ist aus der EP 0 279 728 Al bekannt. Am größeren der beiden Bundbereiche ist dabei die Wand des Faltenbalgs bei gleichmäßiger Wanddicke V-förmig oder U-förmig als Innenfalte nach innen ausgeformt. Dies bildet einen entsprechend geformten äußeren Ringspalt und einen innenliegenden Ringwulst, der in eine tiefe Ringnut des Drehgelenkbauteils eingreift. Zur Montage ist diese dünnwandige Innenfalte insgesamt stark aufzuweiten und zu deformieren.

Um die erforderlichen Kräfte zu reduzieren, ist beispielsweise mit der JP 62-16541 Y 2 vorgeschlagen worden, in der Außennut einen vorstehenden Mittelsteg auszubilden, so daß die Verformung durch das Spannmittel auf diesen Mittelsteg beschränkt bleibt. Dies hat den Nachteil, daß das Material des radial beaufschlagten Steges in die großvolumigen Ringräume unter dem Spannmittel fließen kann, so daß die Verbindung sich löst.

Hiervon ausgehend ist es Aufgabe der Erfindung, einen Faltenbalg im Bereich seines Bundes derart auszugestalten, daß herkömmliche Spannmittel, d. h. Spannbänder normaler Festigkeit verwendet werden können und ungeachtet dessen ein fester Sitz des Bundbereiches sichergestellt ist. Die Montage auf einem Drehgelenkbauteil soll ohne größere Deformierungen möglich sein. Der Faltenbalg soll im Blasverfahren herstellbar sein.

Die Lösung hierfür besteht darin, daß der Ringspalt einstichartig im Querschnitt rechteckig oder trapezförmig mit im Querschnitt größerer Tiefe als Breite ist und daß die Tiefe des einstichartigen Ringspaltes der Dicke des Bundbereiches in der flachen Ringnut neben dem innenliegenden flach ausgebildeten Ringwulst entspricht.

Mit einem derartigen Faltenbalg ist sichergestellt, daß ein sicherer formschlüssiger Eingriff des Innenwulstes in die entsprechende Ringnut erfolgt, der aufgrund des großflächigen Anliegens des Spannbandes in der Außennut nicht verlorengehen kann. Der Innenwulst ist bevorzugt geringfügig breiter als die entsprechende Nut auf dem Gelenkbauteil oder dergleichen, so daß insbesondere in den Flankenbereichen ein sicheres Abdichten erfolgt.

Da unter dem Spannband keine großvolumigen Hohlräume vorgesehen sind, kann sich der Innenwulst nicht aus der Ringnut herausheben.

Durch die einstichartigen Ringspalte in der außenliegenden Ringnut ist die Herstellbarkeit im Blasverfahren möglich, das von einem Schlauchmaterial gleichmäßiger Wandstärke ausgeht. Ohne die erfindungsgemäßen tiefen Ringspalte, die eine Materialverdrängung beim Blasen bewirken, wäre der innenliegende Ringwulst nur bei gleichzeitigem Entstehen großvolumiger Hohlräume unter dem Spannband auf der Außenseite denkbar, womit die eingangs beschriebenen Nachteile verbunden sind.

In bevorzugter Ausgestaltung liegt das Verhältnis zwischen Tiefe und Breite der einstichartigen Ringspalte bei etwa 3, wobei die Dicke des Bundbereichs in der Ringnut seitlich vom innenliegenden Ringwulst zwischen 1,2 und 2 mm betragen soll, um zufriedenstellende Festigkeit aufzuweisen. Bevorzugt werden zwei derartige Ringspalte vorgesehen, wobei eine unsymmetrische Anordnung im bezug auf die außenliegende Ringnut möglich ist.

Ein bevorzugtes Ausführungsbeispiel der Erfindung ist in den Zeichnungen dargestellt.
- Fig. 1: zeigt einen Faltenbalg mit einem erfindungsgemäßen Bundbereich in Gesamtansicht mit einem Teilschnitt,
- Fig. 2: zeigt einen erfindungsgemäßen Bundbereich als Einzelheit.

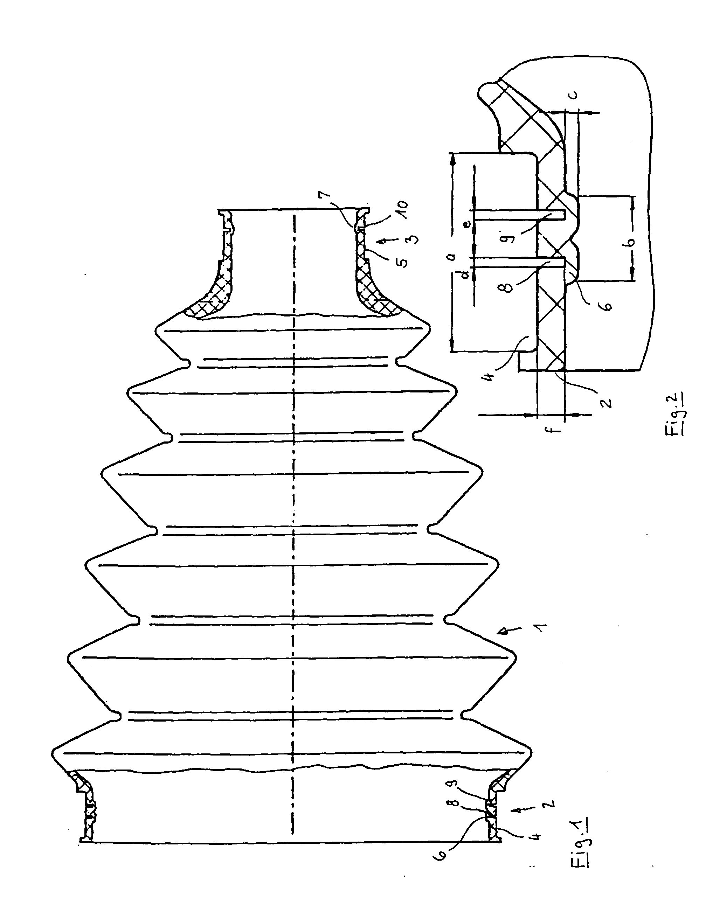

In Fig. 1 ist ein Faltenbalg 1 mit einem ersten Bundbereich 2 und einem zweiten Bundbereich 3 jeweils im Teilschnitt gezeigt, wobei erkennbar ist, daß die Bundbereiche jeweils eine flache Umfangsnut 4, 5 und einen inneren Ringwulst 6, 7 haben. In der Ringnut 4 sind zwei tiefe Ringspalte 8, 9 vorgesehen, während in der Ringnut 5 ein einzelner tiefer Ringspalt 10 im Bereich des inneren Ringwulstes 7 angeordnet ist.

Fig. 2 zeigt den Bundbereich 2 als Einzelheit. Hierbei ist die Ringnut 4 von der Breite a dargestellt, innerhalb deren ein Innenwulst 6 von der demgegenüber wesentlich geringeren Breite b und der radialen Tiefe c liegt. Im Bereich des Ringwulstes 6 sind die beiden Ringspalte 8, 9 zur Auformung des inneren Ringwulstes 6 angeordnet, die jeweils gegenüber der Breite a der Ringnut 4 eine sehr geringe Breite d, e und eine demgegenüber große Tiefe f haben, die der Dicke des Bundbereiches 2 seitlich vom inneren Ringwulst 6 entspricht.

### Bezugszeichenliste

- 1: Faltenbalg
- 2: Bundbereich
- 3: Bundbereich
- 4: Ringnut
- 5: Ringnut
- 6: Ringwulst
- 7: Ringwulst
- 8: Ringspalt
- 9: Ringspalt
- 10: Ringspalt

## Patentansprüche

1. Faltenbalg aus dünnwandigem thermoplastischem Elastomer mit zumindest einem Bundbereich (2, 3), der auf der Innenseite einen in eine im Querschnitt rechteck- oder trapezförmige Ringnut eines Drehgelenkbauteils oder dergleichen eingreifenden innenliegenden Ringwulst (6, 7) aufweist und der auf der Außenseite eine im Querschnitt rechteck- oder trapezförmige Ringnut (4, 5) für ein Spannmittel aufweist, die einen im wesentlichen flachen am Spannmittel anliegenden Boden hat und breiter ist als der innenliegende Ringwulst (6, 7), wobei der Bundbereich (2, 3) innerhalb der flachen Ringnut (4, 5) im Bereich des innenliegenden Ringwulstes (6, 7) zumindest einen Ringspalt (8, 9, 10) aufweist,
dadurch gekennzeichnet,
daß der Ringspalt (8, 9, 10) einstichartig im Querschnitt rechteckig oder trapezförmig mit im Querschnitt größerer Tiefe als Breite ist und daß die Tiefe des einstichartigen Ringspaltes (8, 9, 10) der Dicke des Bundbereiches in der flachen Ringnut (4, 5) neben dem innenliegenden flach ausgebildeten Ringwulst (6, 7) entspricht.

2. Faltenbalg nach Anspruch 1,
dadurch gekennzeichnet,
daß das Verhältnis von Tiefe zu Breite des einstichartigen Ringspaltes (8, 9, 10) bei etwa 3 liegt.

3. Faltenbalg nach einem der Ansprüche 1 bis 2,
dadurch gekennzeichnet,
daß die Dicke des Bundbereiches in der flachen Ringnut (4, 5) neben dem innenliegenden Ringwulst (6, 7) 1,2 - 2 mm beträgt.

4. Faltenbalg nach einem der Ansprüche 1 bis 3,
dadurch gekennzeichnet,
daß zwei oder mehr einstichartige Ringspalte (8, 9) im Bereich des innenliegenden Ringwulstes (6) vorgesehen sind.

## Claims

1. A convoluted boot made of a thin-walled thermoplastic elastomer with at least one collar region (2, 3) which, on its inside, comprises an inner annular bead (6, 7) engaging an annular groove of a universal joint part or the like, with the cross-section of said inner annular groove having a rectangular or trapezoidal shape, and which, on its outside, comprises an annular groove (4, 5) for a tensioning element, which annular groove (4, 5) has a rectangular or trapezoidal cross-section, comprises a substantially flat base resting against the tensioning element and is wider than the inner annular bead (6, 7), with the collar region (2, 3), within the flat annular groove (4, 5), in the region of the inner annular bead (6, 7), comprising at least one annular gap (8, 9, 10),
characterised in
that the annular gap (8, 9, 10) is recess-like and has a rectangular or trapezoidal cross-section, with its depth, if viewed in section, being greater than its width and that the depth of the recess-like annular gap (8, 9, 10) corresponds to the width of the collar region in the flat annular groove (4, 5) adjoining the inner flat annular bead (6, 7).

2. A convoluted boot according to claim 1,
characterised in
that the depth/width ratio of the recess-like annular gap (8, 9, 10) amounts to approximately 3.

3. A convoluted boot according to any one of claims 1 to 2,
characterised in
that the thickness of the collar region in the flat annular groove (4, 5) adjoining the inner annular bead (6, 7) amounts to 1.2 - 2 mm.

4. A convoluted boot according to any one of claims 1 to 3,
characterised in
that there are provided two or more recess-like annular gaps (8, 9) in the region of the inner annular bead (6).

## Revendications

1. Soufflet en élastomère à paroi mince comprenant au moins une région de collerette (2, 3), qui comporte sur le côté intérieur un bourrelet annulaire intérieur (6, 7) qui s'engage dans une gorge annulaire de section rectangulaire ou trapézoïdale d'un composant d'un joint tournant ou similaire, et la région de collerette comportant sur le côté extérieur une gorge annulaire de section rectangulaire ou trapézoïdale (4, 5) pour un organe de tensionnement, ladite gorge annulaire ayant un fond sensiblement plat appliqué contre l'organe de tensionnement, et qui est plus large que le bourrelet annulaire intérieur (6, 7), et la région de collerette (2, 3) présente à l'intérieur de la gorge annulaire plate (4, 5) et dans la région du bourrelet annulaire intérieur (6, 7) au moins une fente annulaire (8, 9, 10),
caractérisé :
en ce que la fente annulaire (8, 9, 10) est en forme d'entaille étroite de section rectangulaire ou trapézoïdale ayant en section une profondeur supérieure à sa largeur,
et en ce que la profondeur de la fente annulaire en forme d'entaille étroite (8, 9, 10) correspond à l'épaisseur de la région de collerette dans la gorge annulaire plate (4, 5) à côté du bourrelet annulaire intérieur (6, 7) plat élargi.

2. Soufflet selon la revendication 1, caractérisé en ce que le rapport entre la profondeur et la largeur de la fente annulaire en forme d'entaille étroite (8, 9, 10) est environ égal à 3.

3. Soufflet selon l'une des revendications 1 et 2, caractérisé en ce que l'épaisseur dans la région de collerette dans la gorge annulaire plate (4, 5) à côté du bourrelet annulaire intérieur (6, 7) est de 1,2 à 2 mm.

4. Soufflet selon l'une des revendications 1 à 3, caractérisé en ce qu'il est prévu deux ou plusieurs fentes annulaires en forme d'entaille étroite (8, 9) dans la région du bourrelet annulaire intérieur (6).
